# EUROPEAN PATENT APPLICATION

(11) **EP 1 284 550 A1**
(43) Date of publication of application: **19.02.2003**
(21) Application number: 01306878.8
(22) Date of filing: 13.08.2001
(51) Int. Cl.: H04L 12/24, H04L 12/28, H04L 29/06

(54) **Automatic information transfer**

(71) Applicant: Red-M (Communications) Limited, Wexham, Slough SL3 6PJ (GB)
(72) Inventor: Wakelin, David, Southam, Warwickshire CV47 2YT (GB)
(74) Representative: Finnie, Peter John

(57) **Abstract**

An automatic information transfer system according to the present invention automatically sends information relating to a server to a webpage when that webpage is accessed by a user via the server. The information preferably includes details of the hardware and software contained within the server.

The system allows the webpage to tailor its content on the basis of the information about the server, for example, by showing details of software upgrades available for the server. Preferably the system allows software to be downloaded from the webpage onto the server.

## Description

### Field of the Invention

The present invention relates to interaction between a local network server and a Web page.

### Background to the Invention

Local networks are typically connected to other networks, and in particular the Internet via a single device such as a router or proxy server. These connection devices can have different levels of sophistication both in terms of hardware and software.

An example of a local network communications system suitable for the present invention is Bluetooth. An "Access Server" which is connected both to the Internet and to multiple "Access points", each Access Point including a Bluetooth radio forming, can provide Internet connectivity to the Bluetooth network. For example, a personal computer (PC) or personal digital assistant (PDA) which is Bluetooth enabled can send and receive signals to and from an Access Point over Bluetooth and from there to and from the Internet via the Access Server. The Access Server is a sophisticated device which executes software and has a user interface which allows it to be managed, software to be updated or corrected and other settings to be altered.

### Summary of the Invention

According to the present invention a data transmission system comprises:
a Web browser with a graphical user interface (GUI);
a local server for connecting the Web browser to the Internet; and,
a Web server which serves Web pages to the Web browser;
characterised in that when the Web browser accesses the Web serverthrough the local server the local server sends additional information about itself to the Web server.

Preferably, the Web server selects Web pages to send to the Web browser based on the additional information. Preferably, the additional information includes details of the software running on the local server. Preferably, further software can be downloaded to the local server from the Web server.

The present invention allows a Web site containing information about local servers to generate content that is tailored to the requirements of a particular user/server, for example details of updates that are available for the local server and new applications which can be installed, and allows new applications to be downloaded onto the local server at the click of a button. It also allows a local server to be registered at a manufacturer's web site automatically, saving time and effort for the user.

### Brief Description of the Drawings

Figure 1 is a schematic diagram showing an example of a system in accordance with the present invention;
Figure 2 is a schematic diagram of an example of a local server according to the present invention; and
Figure 3 is an example of a display from a management screen of a local server.

### Detailed Description

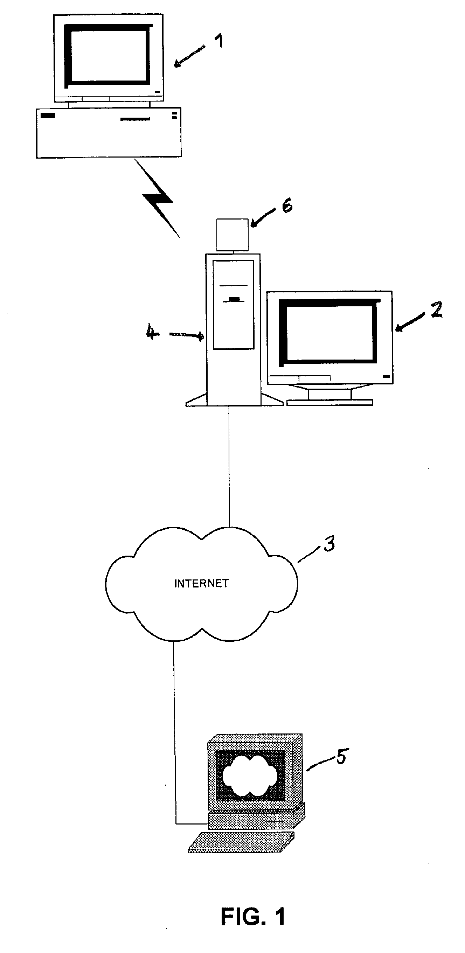

Figure 1 is a schematic representation of a Bluetooth network comprising a Personal Computer (PC) 1 connected to a local server 4, through which it can connect to the Internet. PC 1 is Bluetooth enabled and communicates with the local server 4 via a Bluetooth radio device 6 connected to the local server 4. The local server 4 also has an associated management terminal 2. A user can also connect to the Internet via the local server using the management terminal 2. An example of a suitable local server is the Red-M 3000AS Access Server available from Red-M (Communications) Limited, Slough, UK. A suitable Bluetooth radio device is the Red-M Access Point, also available from Red-M (Communications) Limited.

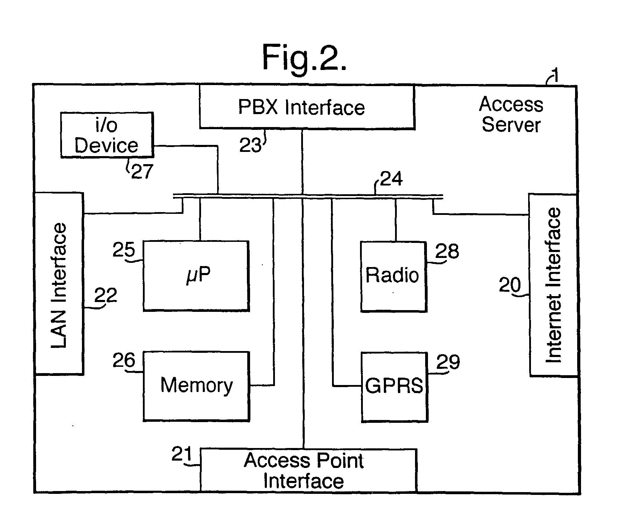

An exemplary local server or Access Server, as shown schematically in Figure 2, runs various software for managing the Bluetooth network and for providing various links to the network. The server may include an Internet interface 20, an Access Point interface 21, a LAN interface 22 and a PBX interface 23, all of which are interconnected via a bus 24. A microprocessor 25 and a memory 26 which are provided for processing and storing the operating software, are also coupled to the bus 24. An input/output device 27 is also provided.

The processor 25 is typically an x86 type processor operating a Linux type operating system such as Red Hat Linux. This is particularly advantageous as the Linux system is widely used as the operating system for a number of different software applications. Accordingly, the system can implement a wide variety of standard operating software for network servers and the like, as well as allowing third parties the opportunity to modify existing software and develop their own software. However, any suitable form of processing system may be used.

In addition to these features, it is also possible to include a number of Bluetooth radios 28, and a GPRS transceiver 29, both of which are coupled to the BUS 24.

A range of radios are supported, including standard and enhanced range devices.

The Internet interface 20 may be provided by providing an ISDN connection to an Internet service provider. However, the system can be reconfigured to use Ethernet, DSL or a POTS modem for Internet connectivity.

In order to be able to handle different communications protocols, each of the interfaces 20,21,22 will include a processor and a memory. The processor operates software stored in the memory which is appropriate for handling the required communications protocol. Thus in the case of the LAN interface 21, the default protocol is Ethernet. However, if alternative protocols such as Token Ring or ATM are used, then the software is adapted to translate the format of the data as it is transferred through the respective interface.

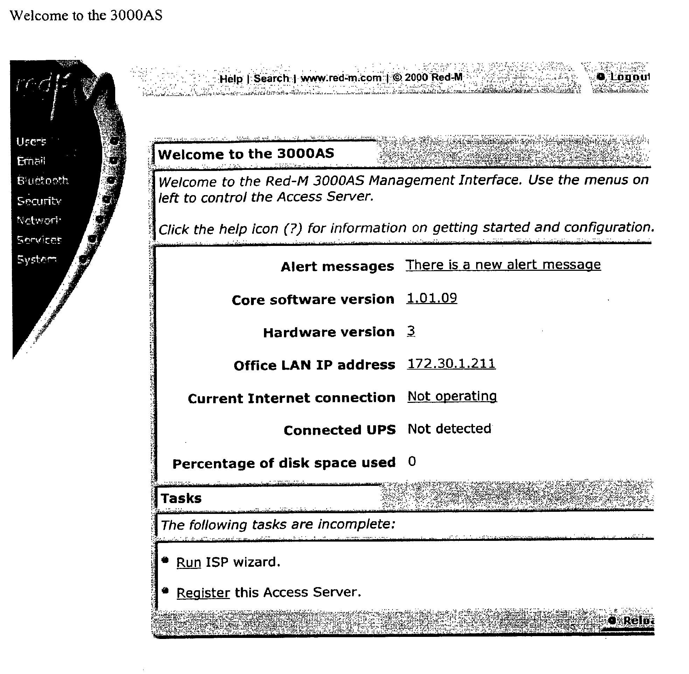

Referring again to Figure 1, the local server 4 can be controlled via a management screen on a Graphical User Interface (GUI) displayed on the management terminal 2 or on one of the elements in the Bluetooth network, e.g. PC 1. A Web server 5 is connected to the Internet 3 at a remote location. Using a Web browser, a user is able to access the Internet from the local server management screen and call up Web pages on PC 1. The management screen of the local server includes icons which are hypertext links which allow a user to connect to a particular IP address with a single click. An example of a page of the Red-M 3000AS is shown in Figure 3. At the bottom of the page the user is given the option to register this Access Server. This registration process requires a link to the Red-M website, www.red-m.com. Other reasons that a link may be provided include the purchase of more equipment and troubleshooting. These would be provided with different icons for the user to click. When a user requests a link to a particular webpage or Internet address from the management screen in this way, via the local server 4, information about the local server 4, such as the serial number, the IP address of the LAN port, details of the software installed, details of the hardware and BIOS versions and configured language, is sent with the connection request to the Web server supporting the webpage. This information is stored on a disk and in a memory 26 on the local server. The information is sent to the Web server supporting the Red-M website, using IP protocol, with the link request, only when the link is made via the management screen of the local server 4. An example of the information that is sent is shown below.
hardware=3
bios=00.12.13
Ethernet=00:02:81:04:40:00
serial=000281044000
seckey=lab9 98bb 4914 7c98 d5f1 bb07 7752 908a
component=core,1.01.09
Wis_bluetoothversion=Version:Release 1.20.3 (Build 1261) [PF=WD S2X TXP=Sync CFG=FLASH]
wis_hwversion=Board ID: 0x01, Board Revision: 0x03
components.wapgw.options=wombat
components.wapgw.key=D14TOP-PAH3SG-T3J8U7-IUSPSI
firewall.external_access.www.server_access_type=LOCAL
management.misc.lang=en
lan_ip=172.30.1.211

The web server receives the information and uses it to register the local server if it has not already been registered by inputting the serial number into a database of registered serial numbers. Some of the information, such as details of the software versions running on the local server, is used to determine the content of the web page displayed. The details are read and content is generated for the web page from a look up table in response to the details. The web page provider can then advertise the available software and hardware upgrades which the server does not already have.

The information sent to the web server also includes the IP address of the LAN port of the local server. If a user decides that he would like some of the software which is advertised on the webpage it can be ordered from the webpage at the click of a button using a hypertext link. Using the LAN address of the local server a link can be made that redirects the user's browser back to the local server 4, with the URL containing information about which file the local server should download and install from the webpage. The server then downloads the file in a conventional manner.

The present invention provides a user friendly means to register a product and reduces the errors associated with manual registration. The invention also provides a user friendly means to download software onto a local server. Furthermore, a manufacturer utilising the present invention can also expect to receive less support calls from customers.

## Claims

1. A data transmission system comprising:
a Web browser with a graphical user interface (GUI);
a local server for connecting the Web browser to the Internet; and,
a Web server which serves Web pages to the Web browser;
**characterised in that** when the Web browser accesses the Web server through the local server the local server sends additional information about itself to the Web server.

2. A data transmission system according to claim 1, wherein the Web server selects Web pages to send to the Web browser based on the additional information.

3. A data transmission system according to claim 1 or 2, wherein the additional information includes details of the software running on the local server.

4. A data transmission system according to any one of the preceding claims, wherein further software can be downloaded to the local server from the Web server.

5. A data transmission system according to claim 4, wherein the Web server redirects the Web browser to the local server, and the Web browser instructs the local server to download the software.

6. A data transmission system according to any one of the preceding claims, wherein the local server is connected to a Bluetooth network.
